# EUROPÄISCHE PATENTSCHRIFT

(11) **EP 1 238 305 B1**
(45) Veröffentlichungstag und Bekanntmachung des Hinweises auf die Patenterteilung: **26.01.2005**
(21) Anmeldenummer: 00993341.7
(22) Anmeldetag: 22.11.2000
(51) Int. Cl.: G02F 1/01

(54) **THERMOOPTISCHER WELLENLEITERSCHALTER**
THERMO-OPTIC WAVEGUIDE SWITCH
COMMUTATEUR THERMO-OPTIQUE DE FIBRES OPTIQUES

(30) Priorität: 07.12.1999 DE 19958899
(43) Veröffentlichungstag der Anmeldung: 11.09.2002
(73) Patentinhaber: Optun (BVI) Ltd., Road Town, Tortola (VG)
(72) Erfinder: BAUMANN, Ingo, 85604 Zorneding (DE); MÄRZ, Reinhard, 81477 München (DE); SCHNEIDER, Hartmut, 81927 München (DE)
(74) Vertreter: Viering, Jentschura & Partner
(86) Internationale Anmeldenummer: PCT/DE2000/004112
(87) Internationale Veröffentlichungsnummer: WO 2001/042848

(56) Entgegenhaltungen:
- EP-A- 0 255 270
- SUGITA A ET AL: "BRIDGE-SUSPENDED SILICA-WAVEGUIDE THERMO-OPTIC PHASE SHIFTER AND ITS APPLICATION TO MACH-ZEHNDER TYPE OPTICAL SWITCH" TRANSACTIONS OF THE INSTITUTE OF ELECTRONICS, INFORMATION AND COMMUNICATION ENGINEERS OF JAPAN,JP,INST. OF ELECTRONICS & COMMUNIC. ENGINEERS OF JAPAN. TOKYO, Bd. E73, Nr. 1, 1990, Seiten 105-108, XP000103975
- PATENT ABSTRACTS OF JAPAN vol. 1996, no. 05, 31. Mai 1996 (1996-05-31) & JP 08 015540 A (SUMITOMO ELECTRIC IND LTD), 19. Januar 1996 (1996-01-19)
- KAWACHI M: "SILICA WAVEGUIDES ON SILICON AND THEIR APPLICATION TO INTEGRATED- OPTIC COMPONENTS" OPTICAL AND QUANTUM ELECTRONICS,GB,CHAPMAN AND HALL, LONDON, Bd. 22, 1990, Seiten 391-416, XP000567665 ISSN: 0306-8919 in der Anmeldung erwähnt

## Beschreibung

Die vorliegende Erfindung betrifft einen thermooptischen Wellenleiterschalter, der auf einem Substrat gebildet ist. Der Wellenleiterschalter umfasst weiterhin eine Glasschicht, die auf dem Substrat angeordnet ist, einen Wellenleiter, der in der Glasschicht angeordnet ist, einen Heizstreifen, der oberhalb des Wellenleiters auf der Glasschicht angeordnet ist und einen Hohlraum, der unterhalb des Wellenleiters angeordnet ist.

Wellenleiterbauelemente dienen zur Durchleitung, Modifizierung, Regelung und Steuerung von optischen Signalen. Derartige Elemente kommen in optischen Netzwerken für die Verteilung oder Umschaltung von Lichtsignalen auf verschiedene Glasfaserstrecken zum Einsatz. Ähnlich wie bei der Glasfaser für die optische Übertragung auf langen Strecken, kommen bei planaroptischen Wellenleiterbauelementen Gläser auf der Basis von Siliziumdioxid, die beispielsweise durch Beimengungen von Germaniumoxid, Phosphöroxid oder Boroxid modifiziert sind, zum Einsatz. Die planaroptischen Wellenleiterbauelemente werden dabei auf einem Siliziumsubstrat hergestellt. Dieses Herstellungsverfahren ist beispielsweise in EP 0 255 270 A2, worin alle Merkmale der Präambeln der unabhängigen Ansprüche 1 und 3 offenbart sind, in M. Kawachi, "Silica'waveguide on silicon and their application to integrated-optic components", Optical and Quantum Electronics 22 (1990), S. 391 bis 416 und in H.W. Schneider, "Realisation of SiO₂-B₂O₃-TiO₂ Waveguides and Reflectors on Si Substrats", in "Optical Waveguide Materials", edited by M.M. Broer, R.T. Kersten, G.H. Sigel and H. Kawazoe, Materials Research Society Symposium Proceedings. Vol. 244, 1992, S. 337 bis 342 beschrieben.

Es hat sich als vorteilhaft herausgestellt, zur Anpassung des elektromagnetischen Feldes den planaren Wellenleiter in Breite, Höhe und Brechzahl der Glasfaser so ähnlich wie möglich zu dimensionieren, damit die Koppelverluste zwischen Glasfaser und planaroptischem Wellenleiter so klein wie möglich gehalten werden.

In Glasfasernetzwerken ist es erforderlich, neben einer rein passiven Trennung oder Mischung von Lichtsignalen, diese auch aktiv umzuschalten. Die dielektrischen Glaswellenleiter sind wegen ihres geringen elektrooptischen Koeffizienten zunächst nicht schaltbar. Zu aktiv steuerbaren planaroptischen Wellenleiterbauelementen gelangt man jedoch, wenn die Abhängigkeit der Brechzahl von der Temperatur oder von dem Druck ausgenutzt wird. Ein typisches aktiv steuerbares optisches Bauteil ist das abstimmbare Mach-Zehnder-Interferometer, das in Theodor Tamir (ED.) "Guided-Wave Optoelectronics", Springer-Verlag, Berlin, 1988, Seite 174 bis 184 beschrieben wird. Dabei wird das Eingangssignal über einen Strahlteiler (Richtkoppler oder auch Y-Gabel) auf die beiden Arme des Interferometers aufgeteilt und anschließend wieder vereinigt. Je nach Phasenlage ΔΦ=β·ΔL der beiden Lichtsignale in den beiden Armen des Interferometers kommt es im Vereiniger für ΔΦ=*m*·2π zu konstruktiver und für ΔΦ=*m*·2π+π zu destruktiver Interferenz (*m*∈Z). Für konstruktive Interferenz gelangt das Lichtsignal an den Ausgang des Mach-Zehnder-Interferometers und der Ausgang ist aktiv, im Fall destruktiver Interferenz ist der Ausgang inaktiv.

Die für den optischen Wellenleiterschalter für Schaltungszwecke erforderliche Phasenänderung ΔΦ lässt sich durch eine Zustandsänderung des planaroptischen Wellenleiters, z.B. durch eine Temperaturänderung, bewirken. Mit der Temperaturänderung geht sowohl eine Längenänderung ΔL wie auch eine Änderung der Ausbreitungskonstanten Δβ einher, die beide zur Änderung der Phasenlage beitragen: *ΔΦ=β·ΔL+L·Δβ* oder ΔΦ=β(*dL*/*d*T)·ΔT+*L*(*d*β/*d*T)·ΔT.

Die thermische Längenänderung ergibt sich nach Maßgabe des linearen Ausdehnungskoeffizienten *α* nach *α*=1/*L*·*dL*/*d*T, die Änderung der Ausbreitungskonstanten infolge des thermooptischen Effekts *dn*/*d*T = 2/2π·*d*β/*d*T. In akustooptischen Bauelementen wird die Phasenlage durch eine Druckänderung ΔP erreicht.

Üblicherweise befindet sich der Glaswellenleiter bei planaroptischen Wellenleiterbauelementen in einer Siliziumdioxidschicht, die auf einem Siliziumsubstrat gebildet ist. Dabei besteht zwischen der Siliziumdioxidschicht und dem Siliziumsubstrat ein hervorragender mechanischer Kontakt, da die Siliziumdioxidschicht bei höheren Temperaturen abgeschieden bzw. aufgeschmolzen wird. Dadurch erhalten die Wellenleiterstrukturen nicht nur eine hohe optische Transparenz, sondern auch die erforderliche mechanische Stabilität. Die feste mechanische Ankopplung der Glasstruktur an das Substrat führt jedoch dazu, dass eine thermische Beeinflussung des Wellenleiters, die eine Phasenänderung ΔΦ hervorrufen soll, damit das Mach-Zehnder-Interferometer geschaltet werden kann, sehr stark gedämpft ist. Dies liegt an der hohen thermischen Leitfähigkeit des Siliziumsubstrats, welches die zugeführte Wärme sehr schnell abtransportiert, was zu hohen Heizleistungen führt und die Heizbilanz ungünstig beeinflusst. In der Praxis, insbesondere bei komplexen Schaltungen, führt dies zu unerwünschten Problemen, wie z.B. einer lokalen Überhitzung und macht zusätzliche Kühleinrichtungen erforderlich.

Daher sind bereits von Akio Sugita, Kaname Jinguji, Norio Takato, Katsumi Katoh, Masao Kawachi, "Bridge-Suspended Silica-Waveguide Thermo-Optic Phase Shifter and Ist Application to Mach-Zehnder Type Optical Switch", The Transactions of the IEICE, Vol. E73, No. 1, 1990, S. 105 bis 108 sowie von Masayuki Okuno, Nori Takato, Tsutomu Kitoh, Akio Sugita, "Silica-Based Thermo-optic Switches", NTT Review, Vol. 7, No. 5, 1995, S. 57 bis 63 freitragende, vom Substrat entkoppelte SiO₂-Strukturen, die durch Unterätzung realisiert wurden, vorgeschlagen worden. Diese Strukturen erfordern geringere Heizleistungen für die Phasenabstimmung, sind jedoch infolge ihrer mechanischen Instabilität und Zerbrechlichkeit schwer zu handhaben.

Die Aufgabe der vorliegenden Erfindung besteht darin, einen Wellenleiterschalter anzugeben, der eine hohe mechanische Stabilität aufweist und bei dem die erforderliche Temperaturänderung mit geringen Heizleistungen durchgeführt werden kann. Weiterhin besteht die Aufgabe in der Angabe eines entsprechenden Herstellungsverfahrens.

Erfindungsgemäß wird diese Aufgabe durch den in Anspruch 1 angegebenen Wellenleiterschalter gelöst. Anspruch 1 umfasst: Einen Wellenleiterschalter mit: einem Substrat; einer Glasschicht, die auf dem Substrat angeordnet ist; einem Wellenleiter, der in der Glasschicht entlang einer Längsrichtung angeordnet ist; einem Heizstreifen, der oberhalb des Wellenleiters auf der Glasschicht angeordnet ist; einem Hohlraum, der mindestens teilweise unterhalb des Wellenleiters angeordnet ist und mindestens zwei Stützen, die in dem Hohlraum unterhalb des Wellenleiters angeordnet sind, wobei der Hohlraum quer zur Längsrichtung des Wellenleiters auch neben den mindestens zwei Stützen angeordnet ist.

Betreffend des Verfahrens wird die gestellte Aufgabe durch das in Anspruch 3 angegebene Verfahren gelöst. Dabei wird ein Verfahren angegeben zur Herstellung eines Wellenleiterschalters mit den Schritten: Bereitstellen eines Substrats; Bilden einer ersten Glasschicht auf dem Substrat, wobei in der ersten Glasschicht ein erster Wellenleiter entlang einer Längsrichtung gebildet wird; Strukturieren der ersten Glasschicht seitlich neben dem Wellenleiter, wobei das Substrat zumindest teilweise freigelegt wird; isotropes Ätzen des Substrats, wobei die erste Glasschicht und damit der Wellenleiter zum Bilden eines Hohlraumes teilweise unterätzt wird und mindestens zwei Stützen gebildet werden, wobei der Hohlraum quer zur Längsrichtung des Wellenleiters auch neben den mindestens zwei Stützen angeordnet wird.

Die vorliegende Erfindung behandelt die teilweise Entkopplung des Wellenleiters von dem Substrat. So kann der Wellenleiter durch geringe thermische Leistungen in seinem Zustand beeinflusst werden. Gleichzeitig bleibt die erforderliche mechanische Stabilität erhalten. Dazu werden unter dem Wellenleiter alternierend Hohl- und Massivsegmente angeordnet, so dass der Wellenleiter abschnittsweise freischwebend und dann wieder an das Substrat gebunden ist.

Erfindungsgemäß wird der Hohlraum nicht nur unterhalb des ersten Wellenleiters angeordnet, sondern auch seitlich neben dem ersten Wellenleiter. Dadurch ist der erste Wellenleiter weitestgehend thermisch vom Substrat entkoppelt, und es besteht sogar die Möglichkeit, einen Heizstreifen nicht nur oberhalb des ersten Wellenleiters anzuordnen, sondern auch seitlich neben dem ersten Wellenleiter. Dieses Vorgehen hat den Vorteil, dass der Wellenleiter intensiv, von drei Seiten her, thermisch beeinflussbar ist.

Ausführungsbeispiele der Erfindung werden nachfolgend anhand der Zeichnung dargestellt und erläutert.

In den Figuren zeigen:
- Figur 1: Ein Interferometer gemäß dem Stand der Technik;
- Figur 2: Ein Schnittbild des in Figur 1 dargestellten Interferometers, entlang der Schnittlinie A;
- Figur 3: ein Wellenleiterschalter;
- Figur 4: ein Schnittbild zu dem Herstellungsverfahren des Wellenleiterschalters aus Figur 3 entlang der Schnittlinie B;
- Figur 5: ein Schnittbild des Wellenleiterschalters aus Figur 3 entlang der Schnittlinie B;
- Figur 6: die Draufsicht auf einen erfindungsgemäßen Wellenleiter;
- Figur 7: der erfindungsgemäße Wellenleiter gemäß Figur 6 entlang der Schnittebene C;
- Figur 8: der erfindungsgemäße Wellenleiter gemäß Figur 6 entlang der Schnittlinie D;
- Figur 9: rasterelektronenmikroskopische Aufnahme einer erfindungsgemäß hergestellten Wellenleiterstruktur;
- Figur 10: eine weitere rasterelektronenmikroskopische Aufnahme der erfindungsgemäß hergestellten Wellenleiterstruktur.

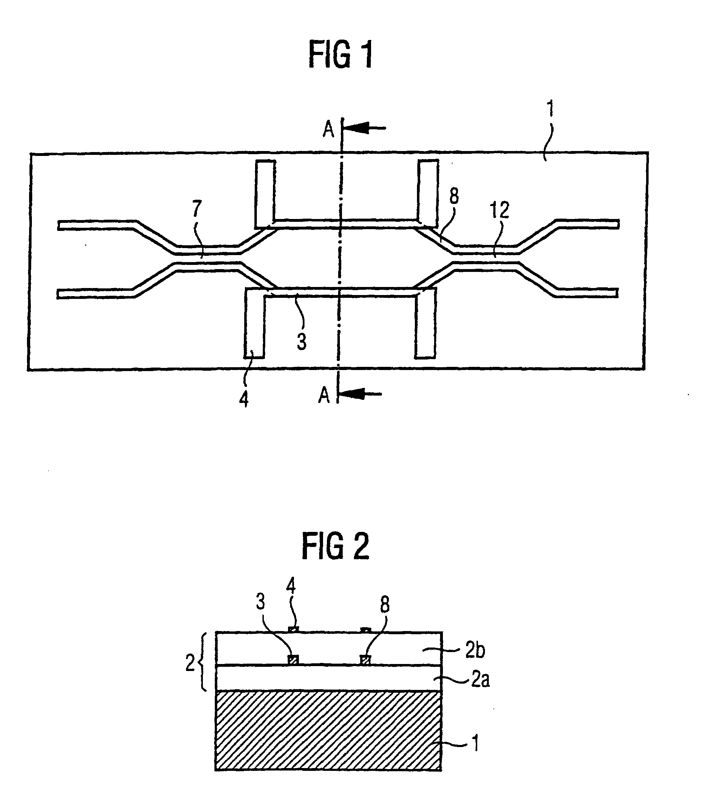

In Figur 1 ist ein thermooptischer Wellenleiterschalter gemäß dem Stand der Technik dargestellt. Der Wellenleiterschalter ist auf dem Substrat 1 gebildet. Der Wellenleiterschalter weist einen ersten Wellenleiter 3 und einen zweiten Wellenleiter 8 auf. Weiterhin umfasst der Wellenleiterschalter einen ersten Koppler 7 und einen zweiten Koppler 12. Das Eingangssignal wird beispielsweise über einen Strahlteiler (Richtkoppler) auf die beiden Arme des Interferometers aufgeteilt. Dies geschieht beispielsweise in dem ersten Koppler 7. Anschließend läuft das Lichtsignal entlang des ersten Wellenleiters 3 und entlang des zweiten Wellenleiters 8. Dabei kann durch den Heizstreifen 4 in dem ersten Wellenleiter 3 eine Phasenverschiebung ΔΦ durch eine Temperaturänderung bewirkt werden. Die Phasenverschiebung führt dazu, dass es in dem zweiten Koppler 12 zu konstruktiver bzw. destruktiver Interferenz der Lichtsignale aus dem ersten Wellenleiter 3 und dem zweiten Wellenleiter 8 kommt.

In Figur 2 ist ein Schnittbild entlang der Schnittlinie A des in Figur 1 dargestellten Wellenleiterschalters dargestellt. Als Trägermaterial dient das Substrat 1, das üblicherweise aus Silizium gebildet ist. Darüber befindet sich eine erste Glasschicht 2, die üblicherweise aus Siliziumdioxid gebildet ist. Wie in Figur 2 dargestellt, kann die erste Glasschicht 2 als Schichtstapel gebildet werden, der aus einer unteren Schicht 2a und einer oberen Schicht 2b besteht. Bevorzugt wird die erste Glasschicht 2 modifiziert, indem Germaniumoxid, Phosphoroxid und/oder Boroxid dem Siliziumoxid beigemischt wird. Die beiden Glasschichten 2a und 2b können in ihrer Beschaffenheit unterschiedlich sein, was z.B. die Dotierung und die Dichte anbelangt. In der ersten Glasschicht 2 verlaufen der erste Wellenleiter 3 und der zweite Wellenleiter 8. Oberhalb des ersten Wellenleiters 3 ist der Heizstreifen 4 angeordnet.

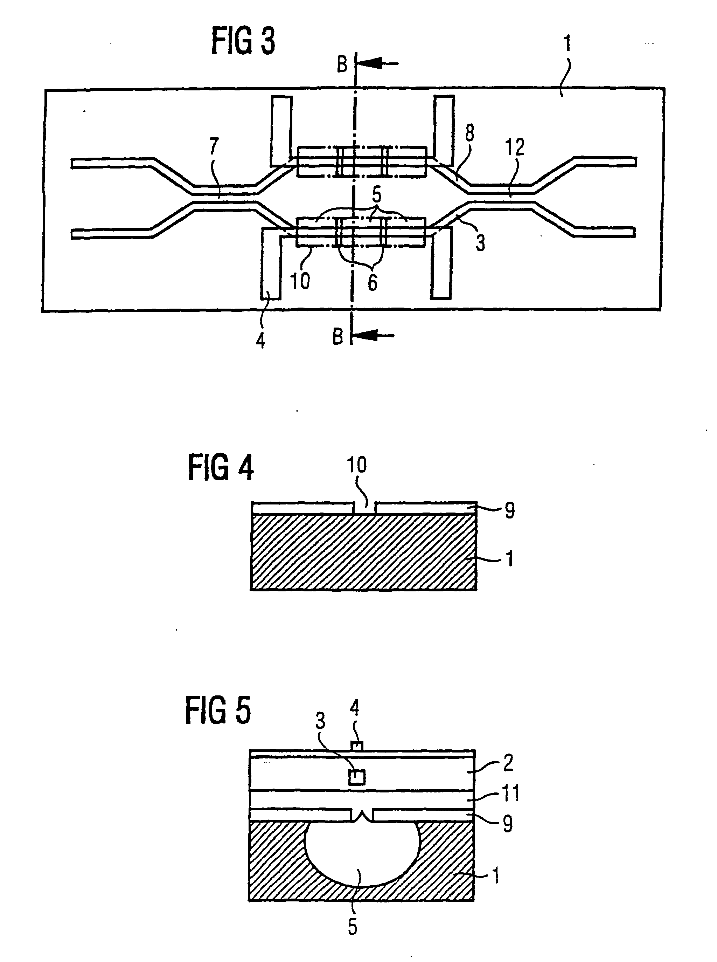

In Figur 3 ist ein thermooptischer Wellenleiterschalter dargestellt. Der Wellenleiterschalter in Figur 3 unterscheidet sich von dem in Figur 1 dargestellten Wellenleiterschalter durch die Anordnung eines Hohlraums 5 unterhalb der beiden Wellenleiter 3 und 8. In dem Hohlraum 5 sind Stützen 6 angeordnet, die für eine verbesserte mechanische Stabilität sorgen. Die Löcheranordnung 10 besteht damit aus dem Hohlraum 5, in dem die Stützen 6 angeordnet sind.

Anhand von Figur 4 wird nun eine erste Variante eines Herstellungsverfahrens für einen Wellenleiterschalter erläutert. Zunächst wird ein Substrat 1 bereitgestellt. Das Substrat 1 besteht beispielsweise aus Silizium. Darauf wird eine zweite Glasschicht 9 abgeschieden, die beispielsweise aus Siliziumoxid besteht. Bei der zweiten Glasschicht 9 handelt es sich typischerweise um ein thermisches Oxid mit einer Dicke von etwa 750 nm. In dem Bereich, in dem der Wellenleiter später gebildet wird, wird mittels Fotolithographie eine Löcheranordnung 10 in der zweiten Glasschicht 9 erzeugt, wobei das Substrat 1 zumindest teilweise freigelegt wird. Dabei wird zweckmäßigerweise der Abstand zwischen.zwei Löchern der Löcheranordnung 10 deutlich größer als der Lochdurchmesser eines Loches gewählt. Beispielsweise wird ein Verhältnis zwischen 20:1 und 2:1, bevorzugt werden Verhältniswerte um 5:1, gewählt.

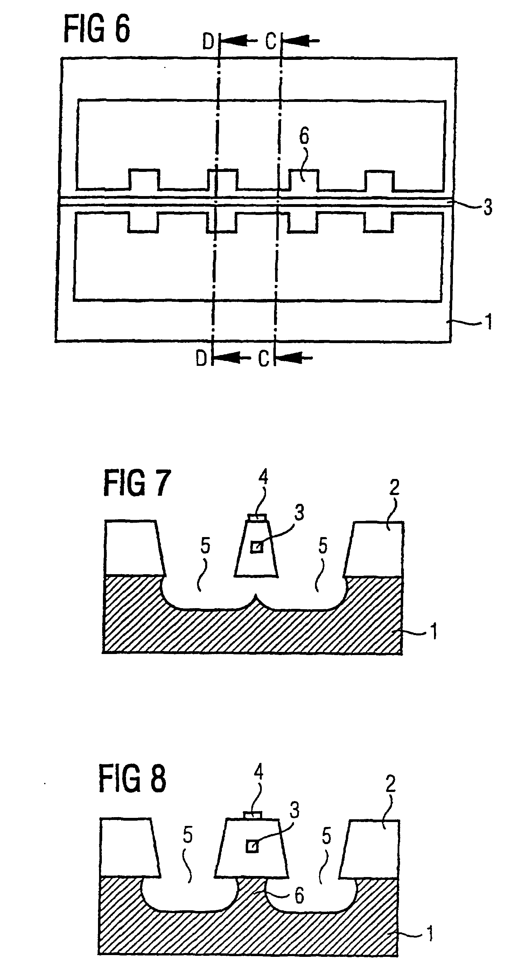

Mit Bezug auf Figur 5 wird mittels einer mindestens teilweise isotropen Ätzung das Substrat 1 selektiv gegenüber der zweiten Glasschicht 9 geätzt. Besteht das Substrat 1 aus Silizium, so kann ein Plasmaätzprozess mit Schwefelhexafluorid als Ätzgas oder ein nasschemischer Ätzprozess unter Verwendung einer basischen Lösung von Kaliumhydroxid verwendet werden. In beiden Fällen wird das Silizium unter der zweiten Glasschicht 9, die als Siliziumoxidmaskenschicht wirkt, isotrop entfernt. Dadurch entsteht eine teilweise freitragende zweite Glasschicht 9, die über Stützen 6 mit dem Substrat 1 verbunden ist.

Für die anschließende Herstellung des Wellenleiters wird eine dritte Glasschicht 11 auf die zweite Glasschicht 9 abgeschieden. Die dritte Glasschicht 11 kann beispielsweise mit einer Dicke von 20 µm gebildet werden und besteht beispielsweise aus Siliziumdioxid. Zur Abscheidung wird beispielsweise eine Flammenhydrolyse verwendet, die sich als besonders geeignet erweist, da wegen der besonderen Abscheidebedingungen die Hohlsegmente nicht aufgefüllt sondern überbrückt werden. Bei der Flammenhydrolyse handelt es sich um eine Diffusion von relativ großen Partikeln aus der Flamme auf die Scheibe. Durch die Abscheidung der dritten Glasschicht 11 wird der Hohlraum 5 in dem Substrat 1 abgeschlossen. Nun wird der erste Wellenleiter 3 oberhalb des Hohlraums 5 mit den aus dem Stand der Technik bekannten Verfahren hergestellt. Anschließend wird das für die Zustandsänderung des Wellenleiters erforderliche Widerstandsheizelement z.B. als Heizstreifen 4 z.B. aus Chrom oder Gold oberhalb des ersten Wellenleiters 3 gebildet.

In Zusammenhang mit Figur 6 wird nun die Herstellung eines Ausführungsbeispiels eines Wellenleiterschalters beschrieben. Zunächst wird eine Struktur gemäß Figur 2 erzeugt. Dazu wird ein Substrat 1 bereitgestellt, welches üblicherweise aus Silizium besteht. Anschließend wird, wie bereits aus dem Stand der Technik bekannt ist, eine erste Glasschicht 2 mit einem ersten Wellenleiter 3 und einem zweiten Wellenleiter 8 auf dem Substrat 1 gebildet. Für die Steuerung des Wellenleiterschalters wird ein Heizstreifen 4 oberhalb des ersten Wellenleiters 3 angeordnet. Mit Bezug auf Figur 6 wird auf beiden Seiten des ersten Wellenleiters 3 die erste Glasschicht 2 mit einer geeigneten Maske entfernt. Die Maske weist dabei Stellen auf, an denen um den ersten Wellenleiter 3 wenig Siliziumdioxid der ersten Glasschicht stehen bleibt, wie es an der Schnittlinie C angedeutet ist und sie weist andere Positionen auf, in denen mehr Siliziumdioxid der ersten Glasschicht 2 um den Wellenleiter 3 herum stehen bleibt, wie es an der Schnittlinie D zu sehen ist.

In Figur 7 ist der Schnitt entlang der Schnittlinie C aus Figur 6 dargestellt. Deutlich ist das Substrat 1 unterhalb der ersten Glasschicht 2 zu erkennen. Das Substrat 1 wird nun selektiv mit einem isotropen Ätzprozess entfernt. Dabei entsteht eine freischwebende Brücke, in der der erste Wellenleiter 3 verläuft. Unterhalb der freischwebenden Brücke mit dem ersten Wellenleiter 3 befindet sich der Hohlraum 5. Oberhalb des ersten Wellenleiters 3 ist der Heizstreifen 4 angeordnet.

In Figur 8 ist der Schnitt entlang der Schnittlinie D aus Figur 6 dargestellt. Hier ist die erste Glasschicht 2 um den ersten Wellenleiter 3 breiter ausgebildet, so dass bei der isotropen Ätzung des Substrats 1 der erste Wellenleiter 3 nicht vollständig unterätzt wird, sondern eine Stütze 6 stehen bleibt.

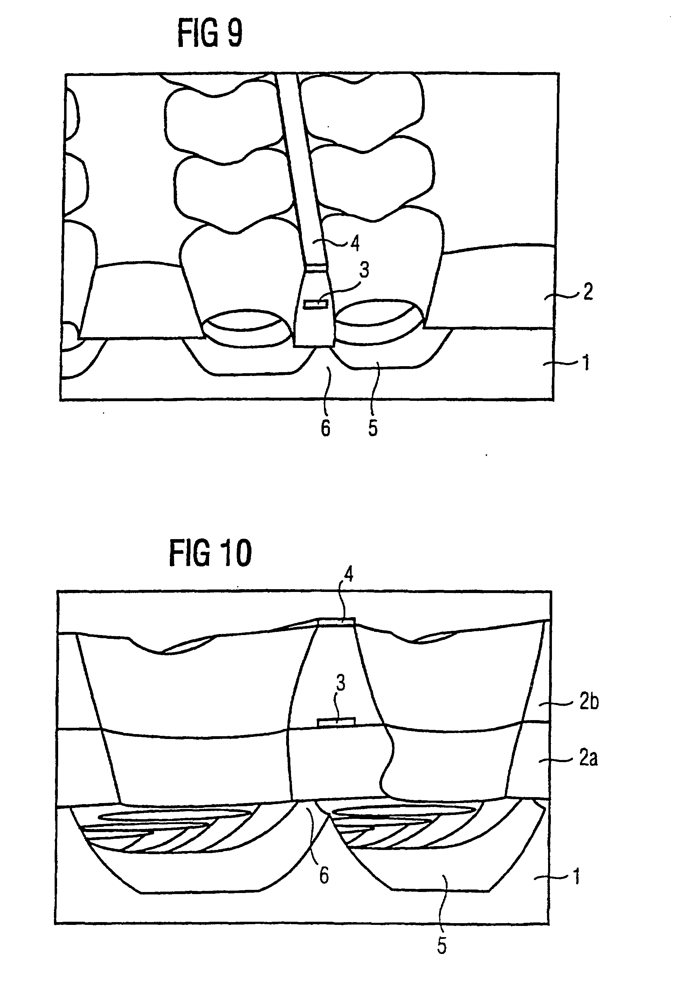

In Figur 9 ist eine rasterelektronenmikroskopische Aufnahme einer bereits mit dieser Technik hergestellten Struktur zu sehen. Deutlich ist das Substrat 1 zu erkennen, auf dem die erste Glasschicht 2 angeordnet ist. Der erste Wellenleiter 3 befindet sich oberhalb der Stützen 6, die in dem Hohlraum 5 angeordnet sind. Oberhalb des ersten Wellenleiters 3 verläuft der Heizstreifen 4.

In Figur 10 ist eine weitere rasterelektronenmikroskopische Aufnahme dargestellt, die die erzeugten Stützen 6, das Substrat 1, die erste Glasschicht 2 und den ersten Wellenleiter 3 aus einer anderen Perspektive darstellt.

## Patentansprüche

1. Ein Wellenleiterschalter mit:
- einem Substrat (1);
- einer Glasschicht (2), die auf dem Substrat (1) angeordnet ist;
- einem Wellenleiter (3), der in der Glasschicht (2) entlang einer Längsrichtung angeordnet ist;
- einem Hohlraum (5), der mindestens teilweise unterhalb des Wellenleiters (3) angeordnet ist, wobei in dem Hohlraum (5) unterhalb des Wellenleiters (3) mindestens zwei Stützen (6) angeordnet sind,
**dadurch gekennzeichnet, dass** der Wellenleiterschalter einen Heizstreifen (4), der oberhalb des Wellenleiters (3) auf der Glasschicht (2) angeordnet ist, enthält und dass der Hohlraum (5) quer zur Längsrichtung des Wellenleiters (3) auch neben den mindestens zwei Stützen (6) angeordnet ist.

2. Wellenleiterschalter nach Anspruch 1,
**dadurch gekennzeichnet, dass**
der Hohlraum (5) unterhalb des Wellenleiters (3) und seitlich neben dem Wellenleiter (3) angeordnet ist.

3. Verfahren zur Herstellung eines Wellenleiterschalters mit den Schritten:
- Bereitstellen eines Substrats (1);
- Bilden einer Glasschicht (2) auf dem Substrat (1), wobei in der Glasschicht (2) ein Wellenleiter (3) entlang einer Längsrichtung gebildet wird;
- Strukturieren der Glasschicht (2), seitlich neben dem Wellenleiter (3), wobei das Substrat (1) zumindest teilweise freigelegt wird;
- isotropes Ätzen des Substrats (1), wobei die Glasschicht (2) zum Bilden eines Hohlraums (5) teilweise unterätzt wird und in dem Hohlraum (5) mindestens zwei Stützen (6) unterhalb des Wellenleiters (3) gebildet werden;
- **dadurch gekennzeichnet, dass** der Hohlraum (5) quer zur Längsrichtung des Wellenleiters (3) auch neben den mindestens zwei Stützen (6) angeordnet wird.

4. Verfahren nach Anspruch 3,
**dadurch gekennzeichnet, dass**
bei dem Unterätzen der Glasschicht (2) mindestens ein Bereich gebildet wird, in dem die Glasschicht (2) mit dem in ihr fortlaufenden Wellenleiter (3) freischwebend ist und mindestens ein Bereich gebildet wird, in dem die Glasschicht (2) mittels der mindestens zwei Stützen (6) mit dem Substrat verbunden ist.

## Claims

1. A waveguide switch having:
- a substrate (1);
- a glass layer (2) arranged on the substrate (1);
- a waveguide (3) arranged in the glass layer (2) along a length direction;
- a cavity (5) arranged at least partly below the waveguide (3), wherein at least two supports (6) are arranged in the cavity (5) below the waveguide (3);
**characterized in that**
the waveguide switch comprises a heating strip (4) arranged above the waveguide (3) on the glass layer (2); and
the cavity (5) is also arranged beside the at least two supports (6) across the length direction of the waveguide (3).

2. The waveguide switch as claimed in claim 1,
**characterized in that**
the cavity (5) is arranged below the waveguide (3) and laterally beside the waveguide (3).

3. A method for fabricating a waveguide switch having the steps of:
- providing a substrate (1);
- forming a glass layer (2) on the substrate (1), a waveguide (3) being formed in the glass layer (2) along a length direction;
- patterning the glass layer (2), laterally beside the waveguide (3), the substrate (1) being at least partly uncovered;
- isotropically etching the substrate (1), the glass layer (2) being partly underetched and at least two supports (6) being formed in the cavity (5) below the waveguide (3);
**characterized in that**
- the cavity (5) also being arranged beside the at least two supports (6) across the length direction of the waveguide (3).

4. The method as claimed in claim 3,
**characterized in that**
during the underetching of the glass layer (2), at least one region is formed in which the glass layer (2) is freely suspended with the waveguide (3) running continuously in it, and at least one region is formed in which the glass layer (2) is connected to the substrate by means of the at least two supports (6).

## Revendications

1. Commutateur à fibre optique comprenant :
- un substrat (1) ;
- une couche de verre (2), qui est agencée sur le substrat (1) ;
- un câble à fibre optique (3), qui est agencé dans la couche de verre (2) le long d'une direction longitudinale ;
- une cavité (5), qui est agencée au moins en partie en dessous du câble à fibre optique (3), au moins deux supports (6) étant agencés dans la cavité (5) en dessous du câble à fibre optique (3),
**caractérisé en ce que** le commutateur à fibre optique comporte un filament chauffant (4), qui est agencé au-dessus du câble à fibre optique (3) sur la couche de verre (2), et **en ce que** la cavité (5) est agencée transversalement à la direction longitudinale du câble à fibre optique (3) également à côté desdits au moins deux supports (6).

2. Commutateur à fibre optique selon la revendication 1, **caractérisé en ce que** la cavité (5) est agencée en dessous du câble à fibre optique (3) et latéralement à côté du câble à fibre optique (3).

3. Procédé de réalisation d'un commutateur à fibre optique, comprenant les étapes suivantes :
- préparation d'un substrat (1) ;
- formation d'une couche de verre (2) sur le substrat (1), un câble à fibre optique (3) étant formé dans la couche de verre (2) le long d'une direction longitudinale ;
- structuration de la couche de verre (2), latéralement à côté du câble à fibre optique (3), le substrat (1) étant au moins partiellement dégagé ;
- gravure isotrope du substrat (1), la couche de verre (2) recevant partiellement une gravure sous-jacente pour former une cavité (5) et au moins deux supports (6) étant formés dans la cavité (5) en dessous du câble à fibre optique (3) ;
**caractérisé en ce que** la cavité (5) est agencée transversalement à la direction longitudinale du câble à fibre optique (3) également à côté desdits au moins deux supports (6).

4. Procédé selon la revendication 3, **caractérisé en ce que**, pendant la gravure sous-jacente de la couche de verre (2), il se forme au moins une zone dans laquelle la couche de verre (2), conjointement avec le câble à fibre optique (3) s'étendant dans celle-ci, est librement en suspension et il se forme au moins une zone dans laquelle la couche de verre (2) est reliée au substrat (1) par l'intermédiaire desdits au moins deux supports (6).
